Europäisches Patentamt

European Patent Office

Office européen des brevets

(11) Veröffentlichungsnummer: **0 369 291**
**A2**

# (12) EUROPÄISCHE PATENTANMELDUNG

(21) Anmeldenummer: **89120574.2**

(22) Anmeldetag: **07.11.89**

(51) Int. Cl.5: **C08L 83/04, C08K 9/04**

(30) Priorität: **18.11.88 DE 3839034**

(43) Veröffentlichungstag der Anmeldung:
**23.05.90 Patentblatt 90/21**

(84) Benannte Vertragsstaaten:
**AT BE CH DE ES FR GB GR IT LI LU NL SE**

(71) Anmelder: **BAYER AG**

**D-5090 Leverkusen 1 Bayerwerk(DE)**

(72) Erfinder: **Endres, Robert, Dr.**
**Kalmüntener Strasse 8**
**D-5060 Bergisch-Gladbach 2(DE)**
Erfinder: **Weber, Wilhelm, Dr.**
**Heinrich-von-Kleist-Strasse 10**
**D-5090 Leverkusen 1(DE)**
Erfinder: **Preuss, Krystyna, Dipl.-Ing.**
**Vincent-van-Gogh-Strasse 32**
**D-5090 Leverkusen 1(DE)**

(54) **Unter Feuchtigkeitsausschluss lagerfähige RTV-1K-Massen.**

(57) Die vorliegende Erfindung betrifft unter Ausschluß von Feuchtigkeit lagerfähige, bei Umgebungstemperatur unter Einwirkung von Wasser oder atmosphärischer Luft zu reißfesten Elastomeren hoher Dehnung vernetzbare Polydiorganosiloxanmassen, erhältlich durch Mischen von $\alpha,\omega$-Dihydroxypolydiorganosiloxanen, $\alpha,\omega$-Bis-(triorganylsiloxy)-polyorganosiloxanen, Füllstoffen und gegebenenfalls Pigmenten, Titansäureestern sowie als Vernetzungsmittel Organyltrimethoxysilane, wobei als Füllstoff gefällte, hydrophobierte Kreide mit einer Restfeuchtigkeit unter 0,4 Gew.-% verwendet wird.

EP 0 369 291 A2

## Unter Feuchtigkeitsausschluß lagerfähige RTV-1K-Massen

Bei der vorliegenden Erfindung handelt es sich um ein neutrales, lagerstabiles Einkomponentensystem auf Siliconbasis, das an atmosphärischer Luft vernetzt und als Vernetzungsmittel ein Organyltrimethoxysilan enthält.

An atmosphärischer Luft vernetzbare Siliconpasten bestehen in der Regel aus $\alpha,\omega$-Dihydroxypolydiorganosiloxanen, Siliconölen, Füllstoffen und gegebenenfalls Pigmenten, die miteinander gründlich vermischt werden. Versetzt man solche Pasten mit Organosilanen, die mehr als zwei reaktive Gruppen enthalten und sowohl mit Silanolgruppen als auch mit feuchter Luft reagieren - wobei diese Reaktionen erfahrungsgemäß von Katalysatoren wie titan- und zirkonorganischen Verbindungen sowie Schwermetallsalzen katalysiert werden - und schließt man den Zutritt von Wasser und Wasserdampf aus, so ergeben sich Massen, die erst an atmosphärischer Luft durchhärten. Solche Systeme werden z.B. in der Baubranche für die Abdichtung von Sanitär-, Boden- und Wandfugen oder für die Versiegelung von Fenstern zwischen Glas und Rahmen bzw. zwischen Rahmen und Wand verwendet. Im Fall von Aluminiumfenstern bevorzugt man sogenannte neutrale Systeme, die beispielsweise keine Essigsäure oder andere Carbonsäuren und auch keine Amine abspalten und damit eine Korrosion verursachen können. Zu diesen Neutralsystemen gehören u.a. die Alkoxysysteme, also Siliconmassen, die als Vernetzer Silane mit mehr als zwei Alkoxygruppen enthalten. So beschreibt z.B. die DE-AS 1 118 454 Systeme mit OH-endgestoppten Polydiorganosiloxanen und Silanen des Typs $Si(OR)_4$ oder $R'Si(OR)_3$, die mit Vernetzungskatalysatoren wie Organozinnverbindungen und Organotitanverbindungen versetzt werden. Solche 1K-Alkoxysysteme sind nicht lagerstabil und vernetzen schon bei Raumtemperatur nach spätestens einigen Wochen in der Kartusche.

Überraschenderweise ist in der vorliegenden Erfindung dieser Nachteil behoben. Es handelt sich hierbei um unter Ausschluß von Feuchtigkeit lagerfähige, bei Umgebungstemperatur unter Einwirkung von Wasser oder atmosphärischer Luft zu reißfesten Elastomeren hoher Dehnung vernetzbare Polydiorganosiloxanmassen, erhältlich durch Mischen von $\alpha,\omega$-Dihydroxypolydiorganosiloxanen, $\alpha,\omega$-Bis-(triorganylsiloxy)-polyorganosiloxanen, Füllstoffen und gegebenenfalls Pigmenten, Titansäureestern sowie als Vernetzungsmittel Organyltrimethoxysilane, dadurch gekennzeichnet, daß als Füllstoff gefällte, hydrophobierte Kreide mit einer Restfeuchtigkeit unter 0,4 Gew.-% verwendet wird.

Die so hergestellten Pasten sind bei Raumtemperatur weit über ein halbes Jahr hinaus und bei 50°C weit über 2 Monate unter Ausschluß von Feuchtigkeit lagerstabil. Die nach dieser Lagerzeit durch Vernetzung an atmosphärischer Luft hergestellten Siliconelastomere haben nicht von ihren guten mechanischen und anderen Eigenschaften wie Anstrichverträglichkeit und Haftung auf den verschiedensten Untergründen eingebüßt.

Für die Herstellung der erfindungsgemäßen RTV-1K-Massen werden als Polymere bevorzugt $\alpha,\omega$-Dihydroxypolydiorganosiloxane eingesetzt, die Methylgruppen enthalten und deren Viskosität bei 20°C zwischen 1000 und 1 000 000 mPas, besonders bevorzugt zwischen 10 000 und 300 000 mPas liegt. Die Konzentration des Polymers sollte zwischen 25 und 50 Gew.-% liegen. Das als Weichmacheröl bevorzugte Trimethylsiloxy-endgestoppte Polydimethylsiloxanöl mit einer Viskosität zwischen 30 und 10 000 mPas, bei 20°C gemessen, sollte nur in der Menge verwendet werden, die zur Einarbeitung der Füllstoffe in das Polymer benötigt wird.

Als optimale Verstärkungsfüllstoffe haben sich gefällte und damit besonders feinteilige Kreiden erwiesen mit einem mittleren Teilchendurchmesser unter 0,5 $\mu$m, bevorzugt unter 0,1 $\mu$m, die mit Carbonsäuren, wie z.B. Stearinsäure oder Silanen wie z.B. Methyltrichlorsilan und/oder Dimethyldichlorsilan. gecoatet und damit hydrophobiert sind. Besonders bevorzugt ist die Stearinsäure, deren Konzentration über 2,0 Gew.-% liegen sollte, eine gleichmäßige Verteilung vorausgesetzt. Für die Herstellung weiß eingefärbter Dichtstoffe sollte auch eine Kreide mit möglichst hohem Weißgrad und geringem Farbstich verwendet werden.

Um standfeste Massen zu erhalten, benötigt man zwischen 30 und 60 Gew.-% Kreide, wobei besonders feinteilige Kreiden bereits ab 35 Gew.-% Standfestigkeit ergeben, während hingegen Kreiden von über 0,1 $\mu$m mittlerer Teilchengröße bis zu 60 Gew.-% zugesetzt werden müssen. Die Ermittlung der Standfestigkeit erfolgt nach DIN 65 262 Teil 3 bei 23°C und 50 % relativer Luftfeuchtigkeit an einem frischen Pastenauftrag auf vertikalem Untergrund. Nach 30 Minuten sollte eine 1 cm dicke Paste nicht mehr als 1,5 mm nach unten gelaufen sein. Diese Norm wird auch als Luftfahrtnorm bezeichnet.

Die Restfeuchtigkeit der Kreide wird nach DIN 53 198, Verfahren A bestimmt (Trocknungsverlust 2 h bei 105°C). Um die erfindungsgemäß beanspruchte Lagerstabilität der Siliconpaste zu garantieren, muß gewährleistet sein, daß der Feuchtigkeitsgehalt der Kreide unter 0,4 Gew.-% liegt. Dies ist ohne aufwendige zusätzliche Trocknungsmaßnahmen dadurch zu erreichen, daß die gefällte und hydrophobierte Kreide nach der Trocknung beim Hersteller sofort in Gebinde mit einer Wasserdampfsperre verpackt wird.

Ein weiterer, sehr entscheidender Bestandteil der vorliegenden Erfindung ist die Verwendung von Organyltrimethoxysilan, besonders bevorzugt Methyltrimethoxysilan als Vernetzungsmittel. Höhere Alkoxysilane wie z.B. Methyltriethoxysilan und Tetraethoxysilan verringern die Zeit der Lagerstabilität sehr stark. Der Anteil von Methyltrimethoxysilan in der Paste sollte bevorzugt zwischen 2 und 4 Gew.-%, besonders bevorzugt zwischen 2,5 und 3 Gew.-% liegen, um auch nach langer Lagerzeit eine gute Haftung zu bewirken.

Als Titansäureester können Titantetraalkylester, Dialkyltitandialkylester und andere Titanorganoester, wie sie z.B. in der Patentanmeldung DE-PS 1 258 087 aufgeführt sind, eingesetzt werden. Der bevorzugte Anteil der titanorganischen Verbindungen in der Paste beträgt zwischen 0,5 und 2 Gew.-%, wobei die niedrigeren Anteile um 0,5 Gew.-% zu höheren Bruchdehnungswerten der Elastomeren- führen. Allerdings muß dann beim Mischprozeß auf eine vorübergehende Viskositätserhöhung der Massen und eine entsprechende Auslegung des Mischaggregates geachtet werden.

Durch die Auswahl der Kreide können, wie zuvor beschrieben, standfeste Systeme erhalten werden. Die Standfestigkeit sollte nicht durch Zusatz von pyrogenen oder gefällten Kieselsäuren angestrebt werden, da dies zur Verstrammung des Elastomers führt, wie das Vergleichsbeispiel 6 zeigt.

Eine weitere Besonderheit der vorliegenden Erfindung besteht darin, daß keine die Vernetzung beschleunigenden Schwermetallverbindungen wie z.B. zinnorganische Verbindungen nötig sind. Das bringt einerseits den Vorteil der hohen Lagerstabilität dieser Einkomponentensysteme. Andererseits erfordern die Hautbildungszeit der erfindungsgemäßen Paste (5 bis 10 Minuten unter Normbedingungen) und die problemlose Vernetzung keine zusätzlichen Maßnahmen.

Bei den bereits genannten Anwendungsmöglichkeiten haben die erfindungsgemäßen Dichtstoff- und Beschichtungsmassen folgende herausragenden Eigenschaften:
- Standfeste, lagerstabile Pasten,
- hochreißfeste und hochdehnbare Elastomere und
- anstrichverträgliche Systeme.

Die mechanischen Werte der nachfolgenden Beispiele beziehen sich auf die DIN-Norm 53 505 (Shore A-Härte) und DIN 53 504 (Normstab).

Die Haftung wurde nach 7 Tagen Durchhärtung eines ca. 10 mm dicken Dichtstoffes unter Normklimabedingungen und anschließend nach 1 Tag, 3 und 7 Tagen unter Wasser auf folgenden Untergründen bestimmt: Plattenglas, Kacheln (glasiert), Eloxal, Aluminium, V4A-Stahl, Eisen, Zink, Kupfer, Hart-PVC, Polymethacrylatglas, Polyethylen, Polycarbonat, Holz und Beton. Die Oberflächen dieser Materialien wurden vor dem Pastenauftrag entfettet. Die pauschale Haftung wird dann prozentual angegeben über die Summe aller Materialien und der 4 Durchhärtungsstufen.

Darüberhinaus wird die Anstrichverträglichkeit wie folgt getestet: Zwei Holzplatten wurden jeweils mit weißem Decklack auf Alkydharzbasis und mit braunem Decklack als wäßrige Emulsion auf Acrylbasis lackiert. Nach der Durchhärtung des Lackes werden am folgenden Tag die 2 Holzplatten mit Dichtstoff überzogen und nach 2 Wochen durch Anschneiden und Ziehen getestet, ob der Dichtstoff auf dem lackierten Untergrund haftet.

Die Lagerstabilität wird als Glashaftung des Elastomeren in Wochen Lagerzeit bei jeweils Raumtemperatur und 50°C bestimmt.

Die angegebenen Viskositäten beziehen sich jeweils auf 23°C.

Die folgenden Beispiele sollen die erfindungsgemäß beanspruchten RTV-1K-Massen veranschaulichen:

Beispiel 1

In eine Mischung aus 27,9 Gewichtsteilen α,ω-Dihydroxypolydimethylsiloxan der Viskosität 50 000 mPas und 15,5 Gewichtsteilen α,ω-Bis-(trimethylsiloxy)-polydimethylsiloxan der Viskosität 1000 mPas werden 51,0 Gewichtsteile einer gefällten, mit Stearinsäure behandelten Kreide eines mittleren Teilchendurchmessers von 0,08 μm und einem Feuchtigkeitsgehalt von 0,3 Gewichtsprozent, 30 min gerührt. Dann werden 2,0 Gewichtsteile Di-i-butoxytitandiacetatessigsäureethylesterchelat zugegeben, 5 min gerührt und 15 min auf 2 mbar evakuiert. Schließlich werden ebenso 3,6 Gewichtsteile Methyltrimethoxysilan eingerührt und das System 15 min unter Vakuum gerührt (bis ca. 50 U/min). Die Masse wird in Kartuschen abgefüllt und unter Ausschluß von Feuchtigkeit gelagert.

EP 0 369 291 A2

| Luftfahrtnorm | 0 mm |
|---|---|
| Lagerstabilität bei | |
| R.T. 50°C | > 30 Wochen > 8 Wochen |

Die Paste vulkanisiert unter Einfluß von Luftfeuchtigkeit (Normklima: 23°C, 50 % relative Feuchte) zu einem Siiconelastomer mit folgenden Eigenschaften:

| Shore A-Härte | 35 |
|---|---|
| E-Modul 100 % | 0,66 $N/mm^2$ |
| Reißfestigkeit | 1,2 $n/mm^2$ |
| Bruchdehnung | 230 % |
| Haftung | 75 % |
| Anstrichverträglichkeit | 100 % |

Beispiel 2

36,5 Gewichtsteile $\alpha,\omega$-Dihydroxypolydimethylsiloxan der Viskosität 50 000 mPas und 14,5 Gewichtsteile $\alpha,\omega$-Bis-(trimethylsiloxy)-polydimethylsiloxan der Viskosität 100 mPas werden mit 44,0 Gewichtsteilen einer gefällten und gecoateten Kreide mit einem Feuchtigkeitsgehalt von 0,3 Gew.-% wie im Beispiel 1 vermischt. In diese Mischung werden 1,5 Gewichtsteile Di-i-butoxytitandiacetessigsäureethylesterchelat und 3,5 Gewichtsteile Methyltrimethoxysilan jeweils nacheinander 5 min eingerührt und 15 min bei 2 mbar evakuiert. Die Paste wird unter Ausschluß von Luftfeuchtigkeit in Kartuschen abgefüllt und gelagert.

| Luftfahrtnorm | 0 min |
|---|---|
| Lagerstabilität bei | |
| R.T. 50°C | > 30 Wochen > 8 Wochen |

## Eigenschaften des durchgehärteten Siliconelastomers:

| | |
|---|---|
| Shore A-Härte | 27 |
| E-Modul 100 % | 0,53 $N/mm^2$ |
| Reißfestigkeit | 1,71 $N/mm^2$ |
| Bruchdehnung | 428 |
| Haftung | 84,4 % |
| Anstrichverträglichkeit | 100 % |

4

Beispiel 3

40,5 Gewichtsteile α,ω-Dihydroxypolydimethylsiloxan der Viskosität 150 000 mPas und 14,0 Gewichtsteile α,ω-Bis-(trimethylsiloxy)-polydimethylsiloxan der Viskosität 100 mPas werden mit 40 Gewichtsteilen gefällter und gecoateter Kreide mit einem Feuchtigkeitsgehalt von 0,3 Gew.-% wie in den Beispielen 1 und 2 vermischt und analog zu den vorangegangenen Beispielen 2,5 Gewichtsteile Di-i-butoxytitandiacetessigsäureethylesterchelat und 3,0 Gewichtsteile Methyltrimethoxysilan jeweils nacheinander 5 min eingerührt und 15 min bis 2 mbar evakuiert. Die Paste wird unter Feuchtigkeitsausschluß abgefüllt und gelagert.

| Luftfahrtnorm | 1 mm |
|---|---|
| Lagerstabilität bei | |
| R.T. 50 °C | > 30 Wochen > 8 Wochen |

| Eigenschaften des durchgehärteten Siliconelastomers: | |
|---|---|
| Shore A-Härte | 23 |
| E-Modul 100% | 0,46 N/mm$^2$ |
| Reißfestigkeit | 1,58 N/mm$^2$ |
| Bruchdehnung | 560 % |
| Haftung | 75 % |
| Anstrichverträglichkeit | 100 % |

Beispiel 4

Es werden 40,5 Gewichtsteile α,ω-Dihydroxypolydimethylsiloxan der Viskosität 50 000 mPas, 16,0 Gewichtsteile α,ω-Bis-(trimethylsilxoy)polydimethylsiloxan der Viskosität 100 mPas, 40,0 Gewichtsteile gefällter und gecoateter Kreide mit einem Feuchtigkeitsgehalt von 0,3 Gew.-%, 1,0 Gewichtsteile Di-i-butoxytitandiacetessigäureethylesterchelat und 2,5 Gewichtsteile Methyltrimethoxysilan wie in den vorangegangenen Beispielen vermischt und in Kartuschen abgefüllt und gelagert.

| Luftfahrtnorm | 1 mm |
|---|---|
| Lagerstabilität bei | |
| R.T. 50 °C | > 30 Wochen > 8 Wochen |

5

| Eigenschaften des durchgehärteten Siliconelastomers: | |
|---|---|
| Shore A-Härte | 18 |
| E-Modul 100% | 0,35 N/mm$^2$ |
| Reißfestigkeit | 2,0 N/mm$^2$ |
| Bruchdehnung | 700 % |
| Haftung | 90,6 % |
| Anstrichverträglichkeit | 100 % |

## Beispiel 5

Es werden 39,0 Gewichtsteile $\alpha,\omega$-Dihydroxypolydimethylsiloxan der Viskosität 50 000 mPas, 11,0 Gewichtsteile $\alpha,\omega$-Bis-(trimethylsiloxy)polydimethylsiloxan der Viskosität 100 mPas, 47,0 Gewichtsteile gefällter und gecoateter Kreide mit einem Feuchtigkeitsgehalt von 0,25 Gew.-% wie in den vorangegangenen Beispielen vermischt und anschließend 2,0 Gewichtsteile Methyltrimethoxysilan zugegeben, 5 min eingerührt und 15 min bis 2 mbar evakuiert. Zu dieser Mischung wurden jeweils 1,0 Gewichtsteile folgender titanorganischer Verbindungen 5 min eingerührt und 15 min bis 2 mbar evakuiert:

5.1 Tetrakis-2-ethylhexyltitanat

5.2 Titantetrabutylat,

5.3 Titantetraethylat.

Die Pasten wurden jeweils unter Ausschluß von Feuchtigkeit in Kartuschen abgefüllt und gelagert.

| | BEISPIEL | | |
|---|---|---|---|
| | 5.1 | 5.2 | 5.3 |
| Luftfahrtnorm (mm) | 1,5 | 1,0 | 1,5 |
| Lagerstabilität bei | | | |
| R.T. (Wochen) | > 30 | > 30 | > 15 |
| 50 °C (Wochen) | > 8 | > 8 | > 4 |
| Eigenschaften der durchgehärteten Siliconelastomere: | | | |
| Shore A-Härte | 27 | 19 | 20 |
| E-Modul 100 % (N/mm$^2$) | 0,50 | 0,31 | 0,33 |
| Reißfestigkeit (N/mm$^2$) | 2,07 | 1,12 | 1,20 |
| Bruchdehnung (%) | 664 | 542 | 455 |
| Haftung (%) | 67,2 | 75,0 | 71,9 |
| Anstrichverträglichkeit (%) | 100 | 100 | 100 |

## Vergleichsbeispiel 6

Es wurden 39,0 Gewichtsteile $\alpha,\omega$-Dihydroxypolydimethylsiloxan der Viskosität 50 000 mPas, 13,5 Gewichtsteile $\alpha,\omega$-Bis-(trimethylsiloxy)polydimethylsiloxan der Viskosität 100 mPas, 43,0 Gewichtsteile gefällter und gecoateter Kreide mit einem Feuchtigkeitstgehalt von 0,25 Gew.-% wie in den vorangegangenen Beispielen vermischt; anschließend rührt man 1 Gewichtsteil Di-i-butoxytitandiacetessigsäureethylesterchelat, 2,5 Gewichtsteile Methyltrimethoxysilan und 1,5 Gewichtsteile pyrogener, siloxanbeladener Kieselsäure mit einer spezifischen Oberfläche von 120 m$^2$/g und einem Feuchtigkeitsgehalt von unter 0,5 Gew.-% jeweils nacheinander 5 min ein und evakuiert jeweils 15 min bis 2 mbar. Die Paste wird unter Feuchtigkeitsausschluß in Kartuschen abgefüllt und gelagert.

| Luftfahrtnorm | 1 mm |
|---|---|
| Lagerstabilität bei | |
| R.T. 50°C | > 30 Wochen > 8 Wochen |

## Mechanischen Eigenschaften des durchgehärteten Silicon-elastomers:

| Shore A-Härte | 38 |
|---|---|
| **E-Modul 100 %** | **0,72 N/mm²** |
| **Reißfestigkeit** | **2,10 N/mm²** |
| **Bruchdehnung** | **513 %** |

Vergleichsbeispiel 7

Es wird eine Paste wie in Beispiel 4 hergestellt, jedoch mit dem Unterschied, daß gefällte, gecoatete Kreide mit einem Feuchtigkeitsgehalt von 1,2 Gew.-% zugesetzt wird (verursacht durch Lagerung an atmosphärischer Luft).

Die so erhaltene Paste ist zwar standfest (Luftfahrtnorm 1 mm), jedoch vernetzt sie bereits nach 1 Woche Lagerung bei 50°C in der Kartusche.

## Ansprüche

1. Unter Ausschluß von Feuchtigkeit lagerfähige, bei Umgebungstemperatur unter Einwirkung von Wasser oder atmosphärischer Luft zu reißfesten Elastomeren hoher Dehnung vernetzbare Polydiorganosiloxanmassen, erhältlich durch Mischen von α,ω-Dihydroxypolydiorganosiloxanen, α,ω-Bis-(triorganylsiloxy)-polyorganosiloxanen, Füllstoffen und gegebenenfalls Pigmenten, Titansäureestern sowie als Vernetzungsmittel Organyltrimethoxysilane, dadurch gekennzeichnet, daß als Füllstoff gefällte, hydrophobierte Kreide mit einer Restfeuchtigkeit unter 0,4 Gew.-% verwendet wird.

2. Polydiorganosiloxanmassen gemäß Anspruch 1, dadurch gekennzeichnet, daß die gefällte Kreise einen mittleren Teilchendurchmesser unter 0,5 μm, bevorzugt unter 0,1 μm hat.

3. Polydiorganosiloxanmassen gemäß den Ansprüchen 1 und 2, dadurch gekennzeichnet, daß mit Stearinsäure hydrophobierte Kreiden verwendet werden.

4. Polydiorganosiloxanmassen gemäß den Ansprüchen 1 bis 3, dadurch gekennzeichnet, daß der Anteil der Kreiden zwischen 30 und 60 Gew.-%, bevorzugt zwischen 35 und 50 Gew.-% beträgt.

5. Polydiorganosiloxanmassen gemäß den Ansprüchen 1 bis 4, dadurch gekennzeichnet, daß als Vernetzungsmittel bevorzugt Methyltrimethoxysilan verwendet wird.

6. Polydiorganosiloxanmassen gemäß den Ansprüchen 1 bis 5, dadurch gekennzeichnet, daß der Anteil von Methyltrimethoxysilan 1,5 bis 6 Gew.-%, bevorzugt 2,0 bis 4,0 Gew.-% beträgt.

7. Polydiorganosiloxanmassen gemäß den Ansprüchen 1 bis 6, dadurch gekennzeichnet, daß der Anteil der Titansäureesterverbindungen zwischen 0,1 bis 4 Gew.-%, bevorzugt zwischen 0,5 und 2 Gew.-% beträgt.

8. Polydiorganosiloxanmassen gemäß den Ansprüchen 1 bis 7, dadurch gekennzeichnet, daß die Pasten ohne Zusatz pyrogener oder gefällter Kieselsäuren hergestellt werden.

9. Polydiorganosiloxanmassen gemäß den Ansprüchen 1 bis 8, dadurch gekennzeichnet, daß die Pasten ohne den Zusatz von die Vernetzung beschleunigenden Schwermetallverbindungen hergestellt werden.

10. Verwendung der nach den Ansprüchen 1 bis 9 hergestellten Polydiorganosiloxanmassen als Beschichtungsstoffe und Fugendichtungsmassen mit guten mechanischen Eigenschaften und guter Anstrichverträglichkeit.